# EUROPÄISCHE PATENTSCHRIFT

(11) **EP 0 950 207 B1**
(45) Veröffentlichungstag und Bekanntmachung des Hinweises auf die Patenterteilung: **12.03.2003**
(21) Anmeldenummer: 97954704.9
(22) Anmeldetag: 20.12.1997
(51) Int. Cl.: G02B 21/00

(54) **TV-KAMERA**
TV CAMERA
CAMERA DE TELEVISION

(30) Priorität: 24.12.1996 DE 19654207
(43) Veröffentlichungstag der Anmeldung: 20.10.1999
(73) Patentinhaber: Leica Microsystems Heidelberg GmbH, 69120 Heidelberg (DE)
(72) Erfinder: ENGELHARDT, Johann, D-76669 Bad Schönborn (DE); HOPPE, Martin, D-74915 Waibstadt (DE)
(74) Vertreter: Naumann, Ulrich, Dr.-Ing.
(86) Internationale Anmeldenummer: DE9702996
(87) Internationale Veröffentlichungsnummer: WO98028905

(56) Entgegenhaltungen:
- EP-A- 0 620 468
- EP-A- 0 666 487
- WO-A-88/08550
- WO-A-93/07522
- WO-A-96/06369
- US-A- 4 844 617
- US-A- 5 587 832
- J.B.PAWLEY: "Handbook of biological confocal microscopy" 1995 , PLENUM , NEW YORK, US XP002082779 siehe Seite 459 - Seite 470
- PATENT ABSTRACTS OF JAPAN vol. 097, no. 001, 31. Januar 1997 & JP 08 237527 A (SONY CORP), 13. September 1996

## Beschreibung

Die Erfindung betrifft eine TV-Kamera für mikroskopische oder makroskopische Abbildungen.

TV-Kameras sind in den unterschiedlichsten Ausführungsformen seit vielen Jahren aus der Praxis bekannt. So werden TV-Kameras beispielsweise an Mikroskopen eingesetzt und dienen dort zur Bildübertragung oder Bildaufnahme in einen Massenspeicher.

Bei zahlreichen Anwendungen sind herkömmliche Lichtmikroskope für den Mikroskopiker nicht hinreichend. Insbesondere bei Inspektionsaufgaben im biomedizinischen Bereich, aber auch im industriellen Bereich, beispielsweise in der Halbleiterindustrie, werden aufgrund dortiger Rahmenbedingungen konfokale Systeme benötigt, die jedoch zur schnellen und einfachen Handhabung völlig überdimensioniert und entsprechend dieser dort erforderlichen "schnellen" Anwendungen viel zu teuer sind.

So ist beispielsweise die Inspektion von dicken biologischen Fluoreszenzpräparaten aufgrund einer Überstrahlung von außerhalb mit konventioneller Optik und konventioneller TV-Kamera nicht möglich, da nämlich das vom interessierenden Focus kommende Licht überstrahlt ist. Der hier erforderliche Einsatz konventioneller konfokaler Systeme ist jedoch für die hier gewünschten einfachen Abbildungen und Dokumentationen zu aufwendig. Standard-TV-Systeme mit Dekonvolution sind ebenfalls teuer, arbeiten langsam und sind in der Handhabung viel zu kompliziert.

Hinsichtlich des konfokale Systeme bzw. Mikroskope betreffenden Standes der Technik wird lediglich beispielhaft auf die WO 91/15792, US-PS 5,537,247 und US-PS 5,535,052 verwiesen.

Der vorliegenden Erfindung liegt nun die Aufgabe zugrunde, eine TV-Kamera für mikroskopische und makroskopische Abbildungen derart auszugestalten und weiterzubilden, daß konfokale Eigenschaften bei kleinstmöglicher Bauweise genutzt werden können, daß demnach keine aufwendigen und kompliziert zu handhabenden konfokale Systeme bei den hier in Rede stehenden einfachen Anwendungen erforderlich sind.

Letztendlich soll dem Mikroskopiker eine TV-Kamera mit konfokalen Eigenschaften zur Verfügung gestellt werden, um diese zur Bewältigung einfacher Aufgaben überall dort einzusetzen, wo die Nutzung bestehender konfokaler Systeme zu teuer und deren Handhabung zu aufwendig ist. Überall dort, wo eine schnelle und einfache Nutzung beispielsweise bei biomedizinischen Inspektionsaufgaben oder im industriellen Bereich wünschenswert ist; soll eine solche TV-Kamera zum Einsatz kommen.

Im biomedizinischen Bereich profitiert nämlich der Nutzer von der konfokalen Eigenschaft insbesondere dadurch, daß auch bei einfacheren Präparationen und dickeren Schnitten sehr gute Abbildungen möglich sind, vor allem auch Abbildungen der durch die Präparation bzw. den Schnitt ungestörten Nachbarbereiche.

Die erfindungsgemäße TV-Kamera für mikroskopische oder makroskopische Abbildungen löst die voranstehehende Aufgabe durch die Merkmale des Patentanspruches 1.

Erfindungsgemäß ist erkannt worden, daß sich die aus der konfokalen Mikroskopie bekannten Vorteile zur einfachen Handhabung in einer TV-Kamera vereinen lassen, nämlich dadurch, daß das konfokale System auf die Funktionalität einer TV-Kamera reduziert wird. Entsprechend umfaßt die - konfokale - TV-Kamera eine konfokale Optik, mit einer einfachen Laserlichtquelle, einem Scanner, einem Detektor und einer Steuerelektronik, wobei die Kamera vorzugsweise durch einen monolithischen Aufbau innerhalb des Kameragehäuses geprägt ist. Dabei wird eine Aufspaltung in wenige justiergenaue Module vorgenommen, und zwar in Module betreffend die Anregung bzw. Lichtquelle, den Detektor und den Scanner. Die einzelnen Komponenten können in das Gehäuse der Kamera eingeklebt sein.

Des weiteren wäre es insbesondere im Hinblick auf eine äußerst vielfältige Anwendung von ganz besonderem Vorteil, wenn die Optik insgesamt polyfokal arbeitet, wobei eine solche Funktionalität nicht zwingend erforderlich ist.

Die Laserlichtquelle umfaßt mindestens einen Diodenlaser, wobei es sich bei dem Diodenlaser um eine kompakte Lichtquelle handelt. Teure Koppelmechanismen sind hier jedenfalls aufgrund der integrierten kompakten Lichtquelle nicht erforderlich.

Des weiteren ist es von Vorteil, wenn als Laserlichtquelle eine Diodenlaserkombination vorgesehen ist, nämlich sowohl zur Ein- und Mehrfarbfluoreszenz als auch zur Reflexion. Auch hieraus ergibt sich eine insgesamt kompakte Lichtquelle, so daß auch insoweit keine aufwendigen Koppelmechanismen zum Einkoppeln einer externen Lichtquelle erforderlich sind.

Die einzelnen Diodenlaser sind über einen Justierkoppler mit Strahlaufweiter über eine Pinholeoptik in einen xy-Scanner einkoppelbar, wobei hier von ganz besonderer Bedeutung ist, daß die Laserlichtquelle insgesamt justierbar angeordnet ist. Eine Justage des später noch zu erörternden Detektors bzw. Detektorblocks bzw. vorgeschalteter Pinholes ist daher nicht erforderlich.

Der Laserlichtquelle können des weiteren auf den Laser optimierte fixe Filter nachgeordnet sein, und zwar in Abhängigkeit der konkreten Anwendung. Auch insoweit ergibt sich eine einfache Bedienung der Kamera.

Neben der internen Laserlichtquelle der TV-Kamera könnte die TV-Kamera in weiter vorteilhafter Weise - vor allem zur universellen Nutzung - einen zusätzlichen Fasereingang zum Einkoppeln eines vorzugsweise großen externen Lasers über Lichtleitfasern umfassen, wobei dieser externe Laser vorzugsweise zur Durchlichtdetektion dienen könnte. Letztendlich ist durch diese Maßnahme eine mechanische Entkopplung größerer Laser geschaffen, nämlich durch Faserkopplung, so daß beispielsweise über den Fasereingang ein ArKr-Laser mittelbar und mechanisch entkoppelt einkoppeln könnte.

Des weiteren könnte ein zusätzlicher Eingang für eine Direkteinkopplung eines weiteren Lasers vorgesehen sein, und zwar für die Einkopplung eines nicht mit Fasern einkoppelbaren externen Lasers. Auch diese Möglichkeit wird durch den zweiten zusätzlichen Eingang offengehalten, wodurch sich die universelle Verwendbarkeit der TV-Kamera abermals erhöht.

Sofern die internen Laser eine Laserleistung von mehr als 1 mW aufweisen, sind besondere Schutzmaßnahmen von Vorteil und ggf. erforderlich. Insoweit ist dem Okular eine Verschlußklappe zugeordnet, die dem Schutz der Bedienungspersonen dient. Des weiteren erfolgt eine automatische Laserabschaltung beim Schließen der Verschlußklappe, wodurch sich die Sicherheit abermals erhöht.

Der in der Kamera verwendete Scanner ist im Sinne eines Punktstrahlscanmechanismus ausgebildet, wobei es sich im Konkreten um einen xy-Scanner, insbesondere um einen xy-PHI-Scanner, handelt.

Zur Einstellung bzw. Positionierung des Bildes, vor allem aber auch zur Untersuchung bzw. Vermessung des Bildes bei unterschiedlich ausgerichteten Strukturen oder aus unterschiedlichen Blickwinkeln, ist es von ganz besonderem Vorteil, wenn sich das Bild rotieren läßt. Dazu kann in mechanischer Hinsicht ein rotierbarer Kameraadapter vorgesehen sein, der beispielsweise zum Anschluß an ein Mikroskop dient. Insoweit läßt sich das Bild mechanisch drehen bzw. rotieren, was einer äußerst einfachen Konstruktion entspricht.

Des weiteren ist es denkbar, daß dem Scanner eine Scanlinse und eine optische Anordnung zur Bildrotation nachgeordnet ist. Ebenso ist es möglich, daß der Scanner eine integrale Anordnung zur Bildrotation umfaßt. Bei dieser optischen Anordnung zur Bildrotation kann es sich um Prismen unterschiedlichster Ausgestaltung handeln. Ebenso könnte die Anordnung zur Bildrotation als Spiegelanordnung ausgeführt sein, so beispielsweise als "K"-Spiegel.

Die im Rahmen der Spiegelanordnung verwendeten Spiegel, aber auch die sonst in der Kamera verwendeten Spiegel können eine planare Spiegeloberfläche aufweisen. Ebenso ist es jedoch auch denkbar, die Spiegel mit einer als Hohlspiegel ausgebildeten Spiegeloberfläche auszubilden, beispielsweise zur Abbildung auf ein Pinhole.

Zur universellen Verwendbarkeit der Kamera ist es von weiterem Vorteil, wenn die Scanoptik bzw. das Okular zur Anpassung an Mikroskope verschiedener Hersteller austauschbar ist. Insoweit läßt sich die Kamera an jedes beliebige Mikroskopsystem unterschiedlicher Hersteller anschließen, wodurch ein hohes Maß an Kompatibilität zu Mikroskopen unterschiedlicher Hersteller gewährleistet ist.

Hinsichtlich einer konkreten Ausgestaltung des Detektors ist es von Vorteil, wenn der Detektor als Mehrfarbdetektor für Reflexion oder Fluoreszenz ausgebildet ist. Ebenso kann es sich bei dem Detektor um einen Spektrometer oder um einen Multibanddetektor handeln.

Im Rahmen einer ganz besonders vorteilhaften Ausgestaltung ist der Detektor als 3-Farb-Detektorblock mit Photomultipliern und Farbfiltern ausgeführt, wobei es sich hierbei um einen monolithischen Detektorblock handeln kann. Dieser Detektorblock ist im Gehäuse der Kamera fest angeordnet.

Im Detektionsstrahlengang könnte wiederum ein Detektionspinhole fest eingebaut sein, wobei die Justage des Detektionsstrahls in ganz besonders vorteilhafter Weise durch Ausrichten der Laserlichtquelle und nicht etwa durch Ausrichten des Pinholes und/oder des Detektorblocks erfolgt. Insoweit ist ein kostengünstiger und vor allem justierstabiler einfacher Aufbau innerhalb der Kamera gewährleistet.

In weiter vorteilhafter Weise ist im Detektionsstrahlengang ein elektronischer Zoom angeordnet. Durch die Vorkehrung eines solchen Zoom läßt sich der abzuspeichernde Bildausschnitt optimieren bzw. optimal einstellen oder vergrößern.

Des weiteren könnte im Detektionsstrahlengang ein Polfilter für Polarisationsanwendungen vorgesehen sein, und zwar vorzugsweise mit farb- bzw. intensitätskodierter Polrichtung. Auch diese konstruktive Maßnahme erhöht die universelle Anwendbarkeit der hier beanspruchten Kamera.

Dem Scanner könnte ein Objektiv mit Fokussiereinrichtung zur makroskopischen Abbildung nachgeordnet sein. Insoweit ließe sich die TV-Kamera ohne weiteres auch im makroskopischen Bereich verwenden, so beispielsweise bei der Qualitätskontrolle in der Halbleitertechnologie, vor allem überall dort, wo im makroskopischen Bereich eine einfache und dabei schnelle Handhabung einer solchen Kamera erforderlich ist.

Im Rahmen einer konkreten mikroskopischen Anwendung könnte dem Scanner unmittelbar eine Mikroskopoptik nachgeordnet und vorzugsweise an das Kameragehäuse angebaut sein. Insoweit ließe sich ein tragbares Konfokalmikroskop, bestehend aus der TV-Kamera und der Mikroskopoptik, realisieren. Die Universalität der TV-Kamera ist dadurch abermals begünstigt.

Hinsichtlich der Steuerelektronik ist es ebenfalls im Hinblick auf die universelle Verwendbarkeit von Vorteil, wenn diese einen Mikroprozessor mit einem Bildzwischenspeicher und einem Standard-TV-Ausgang - BAS- umfaßt. Des weiteren könnte die Steuerelektronik einen Scankonverter umfassen, der den relativ langsamen polyfokalen Scan in Standard-TV-Signale wandelt, beispielsweise in BAS-, FBAS, VGA-, SVGA-, etc. -Signale. Diese Maßnahme dient zum Anschluß von Standard-Ausgabegeräten und Standard-Speichereinrichtungen, wobei dazu eine besondere Schnittstelle zum Anschluß solcher Peripheriegeräte vorgesehen ist. Dabei kann es sich um eine herkömmliche Computer-Schnittstelle handeln.

Nun könnte zu der TV-Kamera ein externer Monitor vorgesehen sein, der über eine besondere Schnittstelle der TV-Kamera verbunden ist. Ebenso wäre es jedoch in ganz besonders vorteilhafter Weise möglich, im Kameragehäuse ein integrales Display vorzusehen, wobei es sich hier vorzugsweise um ein LCD-Display handelt. Insoweit wäre ein externer Monitor jedenfalls nicht erforderlich.

Das Display könnte wiederum eine Datums- und Uhrzeiteinblendung umfassen, die sich gemeinsam mit den Bilddaten abspeichern läßt. Ebenso könnte dem Display ein Touchscreen zugeordnet sein, wodurch sich eine besonders einfache Bedienung der Kamera im Rahmen des Touchscreen ergibt.

Gerade im Rahmen der bereits mehrfach angesprochenen und vor allem bei einfachen Anwendungen gewünschten einfachen Bedienung ist es von weiteren Vorteil, wenn nur wenige Bedienelemente vorgesehen sind. So könnten hier lediglich drei Bedienelemente vorgesehen sein; nämlich Bedienelemente für die Funktionen "Start/Stop", "Intensität" und "Integration".

Mit der Funktion "Start/Stop" läßt sich die TV-Kamera ein- und ausschalten. Die Funktion "Intensität" bezieht sich auf die Ansteuerung der Laserlichtquelle. Mit der Funktion "Integration" lassen sich insbesondere bei schwachen Signalen im Fluoreszenzverfahren mehrere Bilder aufaddieren und dadurch verstärken. Dies ist insbesondere bei schwach fluoreszierenden Objekten von ganz besonderem Vorteil. Mehr Bedienelemente sind im Rahmen einer einfachsten Ausgestaltung der beanspruchten TV-Kamera jedenfalls nicht erforderlich.

Innerhalb des Kameragehäuses könnte zur Abspeicherung von Bildsequenzen in Realtime ein digitaler Massenspeicher angeordnet sein, wobei es sich dabei um ein Magnetband oder einen optischen Massenspeicher handeln kann. Letztendlich lassen sich hier im Rahmen der Anwendung eines Magnetbandes herkömmliche Tapes verwenden, wobei es sich hier in vorteilhafter Weise um Tapes in einer vorzugsweise digitalen Videonorm handeln kann.

Des weiteren ist es von Vorteil, wenn sich beliebig verarbeitete Bilder aus dem Massenspeicher heraus auf dem Display oder einem externen Monitor darstellen lassen.

Schließlich wird der unabhängige Einsatz der beanspruchten TV-Kamera dadurch noch begünstigt, daß eine interne oder externe Energieversorgung über Batterien oder Akkus erfolgt, wodurch sich ein universeller Einsatz ergibt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung dreier Ausführungsbeispiele der Erfindung anhand der Zeichnung zu verweisen. In Verbindung mit der Erläuterung des bevorzugten Ausführungsbeispiels der Erfindung werden auch im allgemeinen bevorzugte Ausgestaltungen und Weiterbildungen der Lehre erläutert. In der Zeichnung zeigt
- Fig. 1: in einer schematischen Seitenansicht ein erstes Ausführungsbeispiel einer erfindungsgemäßen TV-Kamera, wobei dort lediglich die wesentlichen Merkmale der TV-Kamera dargestellt sind,
- Fig. 2: in einer schematischen Seitenansicht ein zweites Ausführungsbeispiel einer erfindungsgemäßen TV-Kamera und
- Fig. 3: in einer schematischen Seitenansicht ein drittes Ausführungsbeispiel einer erfindungsgemäßen TV-Kamera.

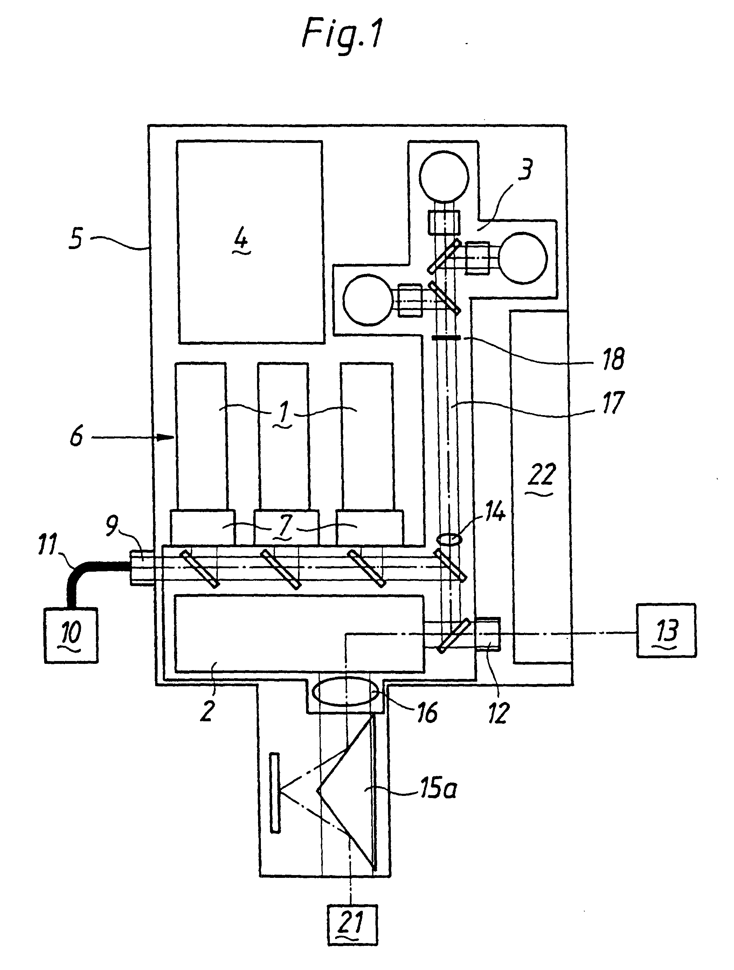

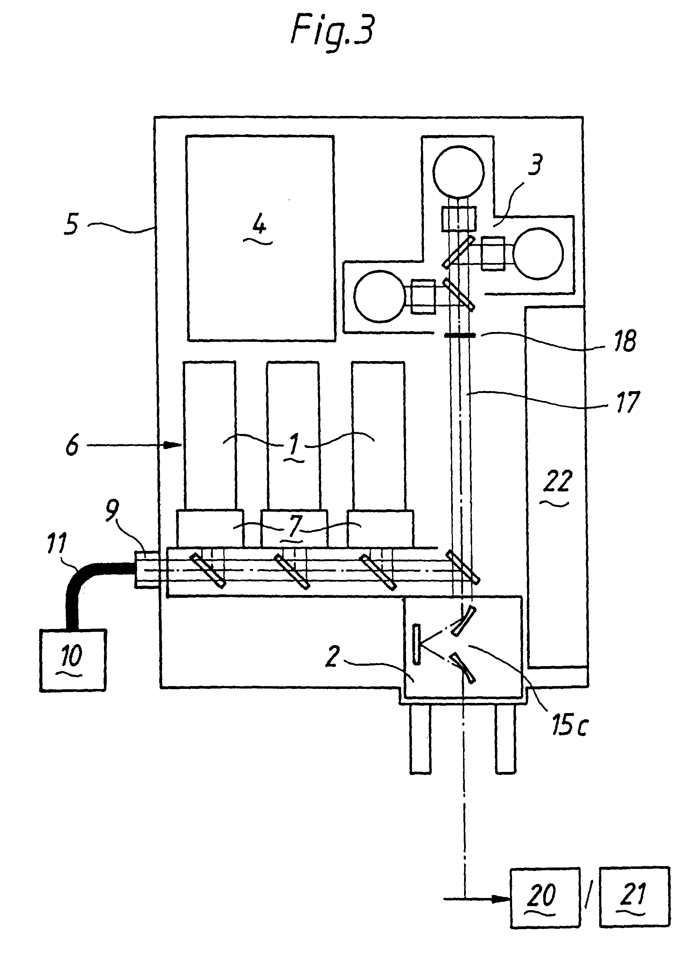

Die Fig. 1 bis 3 zeigen drei sich geringfügig voneinander unterscheidende Ausführungsbeispiele einer erfindungsgemäßen TV-Kamera sowohl für mikroskopische als auch makroskopische Abbildungen, wobei die TV-Kamera grundsätzlich eine konfokale Optik mit einer Laserlichtquelle 1, einem Scanner 2, einem Detektor 3 und einer Steuerelektronik 4 umfaßt.

Das "Innenleben" der TV-Kamera ist durch einen monolithischen Aufbau innerhalb des Kameragehäuses 5 geprägt, wobei eine Aufspaltung in wenige justiergenaue Module betreffend die Anregung bzw. Lichtquelle 1, den Detektor 3 und den Scanner 2 realisiert ist.

Die Laserlichtquelle 1 umfaßt insgesamt eine Diodenlaserkombination 6 zur Einund Mehrfarbfluoreszenz und Reflexion, wobei dieser Diodenlaserkombination 6 ein Justierkoppler 7 mit Strahlaufweiter nachgeordnet ist. Über eine Pinholeoptik 8 wird das Laserlicht in den xy-Scanner 2 eingekoppelt.

Die Fig. 1 bis 3 zeigen des weiteren, daß ein zusätzlicher Fasereingang 9 zum Einkoppeln eines vorzugsweise großen externen Lasers 10 über ein Lichtleitfaserbündel 11 vorgesehen ist. Bei dem in Fig. 1 gezeigten Ausführungsbeispiel ist zusätzlich ein Eingang 12 für eine Direkteinkopplung eines nicht mit Fasern einkoppelbaren weiteren externen Lasers 13 vorgesehen.

In Fig. 1 ist angedeutet, daß dem Scanner 2 eine Scanlinse 14 und eine optische Anordnung 15 zur Bildrotation nachgeordnet ist, wobei es sich bei der optischen Anordnung 15, kurz Bildrotator genannt, um einen sogenannten "K"-Spiegel mit planaren Spiegeloberflächen handelt.

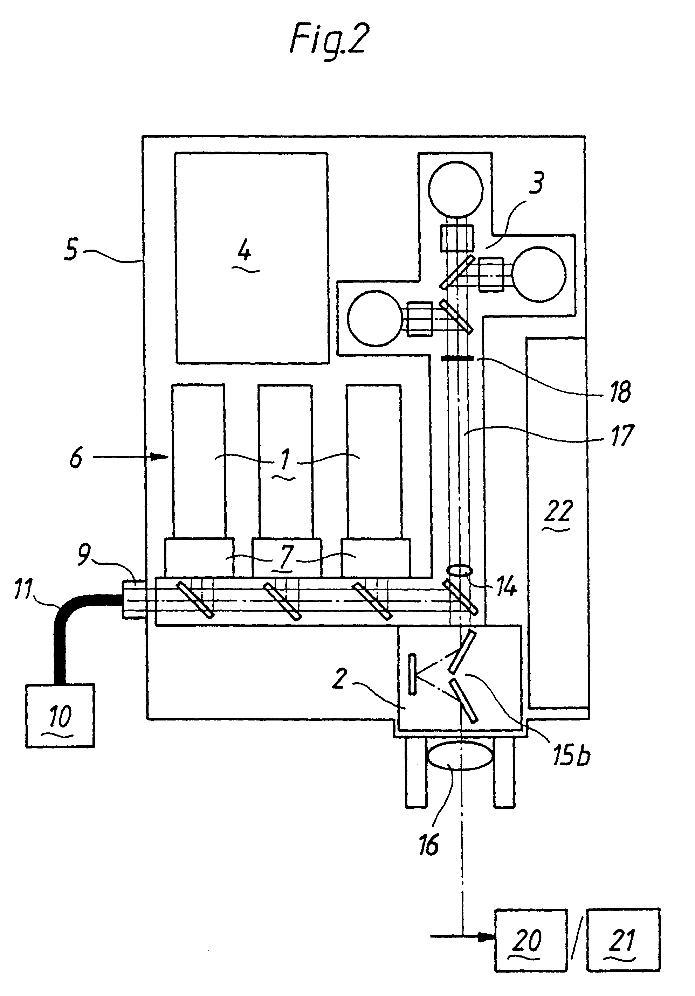

Bei dem in Fig. 2 dargestellten Ausführungsbeispiel ist dem Scanner 2 eine optische Anordnung 15 zur Bildrotation einverleibt bzw. unmittelbar zugeordnet. Auch hier handelt es sich um eine Variante eines "K"-Spiegels, wobei die Ausführung als Prisma ohne weiteres möglich ist.

In den Figuren ist des weiteren angedeutet, daß die Scanoptik 16 bzw. das Okular zur Anpassung an Mikroskope verschiedener Hersteller oder zu unterschiedlichen Anwendungen - Mikroskopie- oder Makroskopiebereich - austauschbar ist. Eine Gesamtschau der Fig. 1 bis 3 weist darauf hin.

Der Detektor 3 ist bei allen drei Ausführungsbeispielen gemäß den Fig. 1 bis 3 als Mehrfarbdetektor für Reflexion oder Fluoreszenz ausgeführt. Hinsichtlich weiterer Ausgestaltungsmöglichkeiten des Detektors 3 wird zur Vermeidung von Wiederholungen auf den allgemeinen Teil der Beschreibung verwiesen, wobei es sich hier im Konkreten um einen 3-Farb-Detektorblock mit Photomultipliern und Farbfiltern handelt.

Die Figuren lassen des weiteren erkennen, daß im Detektionsstrahlengang 17 ein Detektionspinhole 18 fest eingebaut ist. Eine Justage des Detektors 3 bzw. Detektionspinholes 18 ist aufgrund des starren Einbaus nicht vorgesehen. Eine Justage erfolgt vielmehr durch Ausrichten der Laserlichtquelle 1.

In Fig. 2 ist des weiteren angedeutet, daß dem Scanner 2 ein Objektiv 19 nachgeordnet ist, welches eine Fokussiereinrichtung zur makroskopischen Einrichtung aufweisen kann. Im Rahmen einer solchen Ausgestaltung ließe sich die Kamera unmittelbar auf ein Objekt 20 richten oder im Falle der dem Scanner 2 nachgeschalteten Scanlinse 14 an ein Mikroskop 21 anschließen.

Die Steuerelektronik 4 umfaßt einen in den Figuren nicht gezeigten Mikroprozessor mit einem Bildzwischenspeicher und einer Standard-TV-Ausgabe. Insoweit wird ebenfalls zur Vermeidung von Wiederholungen auf den allgemeinen Teil der Beschreibung verwiesen.

Schließlich ist in das Kameragehäuse 5 ein Display 22 integriert, wobei es sich hier im Konkreten um ein LCD-Display mit geringstmöglichem Raumbedarf handelt.

Abschließend sei ganz besonders hervorgehoben, daß die voranstehend erörterten Ausführungsbeispiele zum Verständnis der hier beanspruchten Lehre dienen, diese jedoch nicht auf die Ausführungsbeispiele einschränken.

### Bezugszeichenliste

- 1: Laserlichtquelle
- 2: Scanner
- 3: Detektor
- 4: Steuerelektronik
- 5: Kameragehäuse
- 6: Diodenlaserkombination
- 7: Justierkoppler
- 8: Pinholeoptik
- 9: Fasereingang
- 10: Externer Laser (für den Fasereingang)
- 11: Lichtleitfaser
- 12: Eingang (für Direktkopplung)
- 13: Externer Laser (für den Eingang 12)
- 14: Scanlinse
- 15: Optische Anordnung zur Bildrotation
- 16: Scanoptik
- 17: Detektionsstrahlengang
- 18: Detektionspinhole
- 19: Objektiv
- 20: Objekt
- 21: Mikroskop
- 22: Display

## Patentansprüche

1. TV-Kamera zur Durchführung mikroskopischer oder makroskopischer Abbildungen, mit einem Detektor (3), einer Steuerelektronik (4), einer konfokalen Optik, einer Laserlichtquelle (1) und einem Scanner (2) als Komponenten, **gekennzeichnet durch** ein tragbares Gehäuse (5), in dem die Komponenten angeordnet sind, wodurch die Vorrichtung als Handgerät universell einsetzbar ist.

2. Kamera nach Anspruch 1, **gekennzeichnet durch** einen monolitischen Aufbau innerhalb eines Kameragehäuses (5), mit einer Aufspaltung in wenige justiergenaue Module betreffend die Anregung bzw. Lichtquelle (1), den Detektor (3) und den Scanner (2).

3. Kamera nach Anspruch 1 oder 2, **dadurch gekennzeichnet, daß** die Optik insgesamt polyfokal arbeitet.

4. Kamera nach einem der Ansprüche 1 bis 3, **dadurch gekennzeichnet, daß** die Laserlichtquelle (1) mindestens einen Diodenlaser umfaßt.

5. Kamera nach einem der Ansprüche 1 bis 3, **dadurch gekennzeichnet, daß** als Laserlichtquelle (1) eine Diodenlaserkombination (6) zur Ein- und Mehrfarbfluoreszenz und Reflexion vorgesehen ist.

6. Kamera nach Anspruch 5, **dadurch gekennzeichnet, daß** die einzelnen Diodenlaser über einen Justierkoppler (7) mit Strahlaufweiter über eine Pinholeoptik (8) in einen xy-Scanner (2) einkoppeln.

7. Kamera nach einem der Ansprüche 1 bis 6, **dadurch gekennzeichnet, daß** der Laserlichtquelle (1) auf den Laser optimierte fixe Filter nachgeordnet sind.

8. Kamera nach einem der Ansprüche 1 bis 7, **dadurch gekennzeichnet, daß** ein zusätzlicher Fasereingang (9) zum Einkoppeln eines vorzugsweise großen externen Lasers (10) über ein Lichtleitfaserbündel (11), vorzugsweise für Durchlichtdetektion, vorgesehen ist.

9. Kamera nach einem der Ansprüche 1 bis 8, **dadurch gekennzeichnet, daß** ein zusätzlicher Eingang (12) für eine Direkteinkopplung eines nicht mit Fasern einkoppelbaren externen Lasers (13) vorgesehen ist.

10. Kamera nach einem der Ansprüche 1 bis 9, **dadurch gekennzeichnet, daß** der Detektor (3) als Mehrfarbdetektor für Reflexion oder Fluoreszenz ausgeführt ist.

11. Kamera nach einem der Ansprüche 1 bis 10, **dadurch gekennzeichnet, daß** der Detektor (3) als Spektrometer ausgeführt ist.

12. Kamera nach einem der Ansprüche 1 bis 11, **dadurch gekennzeichnet, daß** der Detektor (3) als Multibanddetektor ausgeführt ist.

13. Kamera nach einem der Ansprüche 1 bis 12, **dadurch gekennzeichnet, daß** der Detektor (3) als 3-Farb-Detektorblock mit Photomultipliern und Farbfiltern ausgeführt ist.

14. Kamera anch einem der Ansprüche 1 bis 13, **dadurch gekennzeichnet, daß** im Detektionstrahlengang (17) ein Detektionspinhole (18) fest eingebaut ist und daß die Justage durch Ausrichten der Laserlichtquelle (1) erfolgt.

15. Kamera nach einem der Ansprüche 1 bis 14, **dadurch gekennzeichnet, daß** im Detektionsstrahlengang (17) ein elektronischer Zoom angeordnet ist.

16. Kamera nach einem der Ansprüche 1 bis 15, **dadurch gekennzeichnet, daß** im Detektionsstrahlengang (17) ein Polfilter für Polarisationsanwendungen angeordnet ist.

17. Kamera nach einem der Ansprüche 1 bis 16, **dadurch gekennzeichnet, daß** die Steuerelektronik (4) einen Mikroprozessor mit einem Bildzwischenspeicher und einem Standard-TV-Ausgang umfaßt.

18. Kamera nach Anspruch 17, **dadurch gekennzeichnet, daß** die Steuerelektronik (4) einen Scankonverter umfaßt, der den relativ langsamen polyfokalen Scan in Standard-TV-Signale wandelt, beispielsweise in BAS-, FBAS-, VGA-, SVGA-, etc. - Signale.

19. Kamera nach Anspruch 17 oder 18, **dadurch gekennzeichnet, daß** eine Schnittstelle zum Anschluß von Peripheriegeräten, insbesondere von Standard-Ausgabegeräten und Standard-Speichereinrichtungen, vorgesehen ist.

20. Kamera nach einem der Ansprüche 1 bis 19, **dadurch gekennzeichnet, daß** im Kameragehäuse (5) ein integrales Display (22) vorgesehen ist.

21. Kamera nach Anspruch 20, **dadurch gekennzeichnet, daß** das Display (22) als LCD-Display ausgeführt ist.

22. Kamera nach Anspruch 20 oder 21, **dadurch gekennzeichnet, daß** das Display (22) eine Datums- und Uhrzeiteinblendung umfaßt.

23. Kamera nach einem der Ansprüche 20 bis 22, **dadurch gekennzeichnet, daß** das Display (22) ein Touchscreen umfaßt.

24. Kamera nach einem der Ansprüche 1 bis 23, **dadurch gekennzeichnet, daß** insgesamt drei Bedienelemente vorgesehen sind, nämlich Bedienelemente für die Funktionen "Start/Stop", "Intensität" und "Integration".

## Claims

1. TV-camera for performing microscopic or macroscopic images, having a detector (3), an electronic control unit (4), a confocal optic, a laser light source (1) and a scanner (2) as components, **characterized by** a transportable housing (5) in which the components are arranged and wherein the apparatus can be used as a hand held device universally.

2. Camera as claimed in claim 1 **characterized by** a solid-state structure inside a camera housing (5) with a split into a few precision adjustable modules relating to the stimulus or light source (1), the detector (3) and the scanner (2).

3. Camera as claimed in claim 1 or 2 whereby the lens as a whole works polyfocally.

4. Camera as claimed in one of the claims 1 to 3 whereby the laser light source (1) includes at least one diode laser.

5. Camera as claimed in one of the claims 1 to 3 whereby the laser light source (1) is in the form of a diode laser combination (6) for monochrome and multi-colour fluorescence and reflection.

6. Camera as claimed in claim 5 whereby the individual diode lasers link into an xy-scanner (2) through an adjusting coupler (7) with beam expander through a pinhole lens (8).

7. Camera as claimed in one of the claims 1 to 6 whereby fixed filters tuned to the laser are fitted after the laser light source (1).

8. Camera as claimed in one of the claims 1 to 7 whereby there is an additional fibre input (9) for linking a preferably large external laser (10) through a fiber optic cable loop (11), preferably for transmitted-light detection.

9. Camera as claimed in one of the claims 1 to 8 whereby there is an additional input (12) for direct linking of an external laser (13) that cannot be linked by fibers.

10. Camera as claimed in one of the claims 1 to 9 whereby the detector ( 3) is in the form of a multicolour detector for reflection or fluorescence.

11. Camera as claimed in one of the claims 1 to 10 whereby the detector (3) is in the form of a spectrometer.

12. Camera as claimed in one of the claims 1 to 11 whereby the detector (3) is in the form of a multiband detector.

13. Camera as claimed in one of the claims 1 to 12 whereby the detector ( 3) is in the form of a three colour detector block with photo multipliers and colour filters.

14. Camera as claimed in one of the claims 1 to 13 whereby a detection pinhole (18) is permanently installed in the detection beam path (17), and adjustment is carried out by aligning the laser light source (1).

15. Camera as claimed in one of the claims 1 to 14 whereby an electronic zoom is mounted in the detection beam path (17).

16. Camera as claimed in one of the claims 1 to 15 whereby a pole filter is mounted in the detection beam path (17) for polarization applications.

17. Camera as claimed in one of the claims 1 to 16 whereby the electronic control unit (4) includes a microprocessor with an image buffer storage and a standard TV-output.

18. Camera as claimed in claim 17 whereby the electronic control unit (4) includes a scan converter that converts the relatively slow polyfocal scan into standard TV-signals, for example BAS-signals, FBAS-signals, VGA-signals, SVGA-signals, etc.

19. Camera as claimed in claim 17 or 18 whereby there is an interface for connecting peripheral equipment, especially standard-output equipment and standard-storage devices.

20. Camera as claimed in one of the claims 1 to 19 whereby there is an integral display (22) in the camera housing (5).

21. Camera as claimed in claim 20 whereby the display (22) is in the form of a LCD display.

22. Camera as claimed in claim 20 or 21 whereby the display (22) includes a date and time overlay.

23. Camera as claimed in claim 20 or 22 whereby the display (22) includes a touch screen.

24. Camera as claimed in one of the claims 1 to 23 whereby there is a total of three controls, namely controls for the functions "START/STOP", "INTENSITY" and "INTEGRATION".

## Revendications

1. Appareil de prise de vues de télévision pour effectuer des prises de vue microscopiques ou macroscopiques, avec un détecteur (3), une électronique de commande (4), une optique confocale, une source lumineuse laser (1) et un scanner (2) en tant que composants,
**caractérisé par** un boîtier (5) portatif dans lequel sont disposés les composants, grâce à quoi le dispositif peut être utilisé universellement en tant qu'appareil manuel.

2. Appareil de prise de vues selon la revendication 1,
**caractérisé par** une construction monolithique à l'intérieur du boîtier (5) de l'appareil de prise de vues, avec une division en quelques modules à ajustement précis concernant l'excitation ou respectivement la source lumineuse (1), le détecteur (3) et le scanner (2).

3. Appareil de prise de vues selon la revendication 1 ou 2,
**caractérisé par le fait que** l'optique travaille dans l'ensemble de manière polyfocale.

4. Appareil de prise de vues selon l'une des revendications 1 à 3,
**caractérisé par le fait que** la source lumineuse laser (1) comprend au moins un laser à diodes.

5. Appareil de prise de vues selon l'une des revendications 1à 3,
**caractérisé par le fait qu'**une combinaison de lasers à diodes (6) est prévue en tant que source lumineuse laser (1) pour une fluorescence mono et pluri chromatique et une réflexion.

6. Appareil de prise de vues selon la revendication 5,
**caractérisé par le fait que** les lasers à diodes individuels modulent dans un scanner xy (2) par un coupleur d'ajustement (7) avec élargisseur de faisceau, par une optique à trous d'épingle (8).

7. Appareil de prise de vues selon l'une des revendications 1 à 6,
**caractérisé par le fait que** la source lumineuse laser (1) est adjointe après un filtre fixe optimisé au laser.

8. Appareil de prise de vues selon l'une des revendications 1 à 7,
**caractérisé par le fait qu'**une entrée de fibre (9) supplémentaire est prévue pour la modulation d'un laser externe (10) de préférence grand par un faisceau de fibres optiques (11), de préférence pour une détection de lumière transmise.

9. Appareil de prise de vues selon l'une des revendications 1 à 8,
**caractérisé par le fait qu'**une entrée (12) supplémentaire est prévue pour une modulation directe d'un laser externe (13) ne pouvant pas être modulé avec des fibres.

10. Appareil de prise de vues selon l'une des revendications 1 à 9,
**caractérisé par le fait que** le détecteur (3) est réalisé sous forme de détecteur plurichromatique pour la réflexion ou la fluorescence.

11. Appareil de prise de vues selon l'une des revendications 1 à 10,
**caractérisé par le fait que** le détecteur (3) est réalisé sous forme de spectromètre.

12. Appareil de prise de vues selon l'une des revendications 1 à 11,
**caractérisé par le fait que** le détecteur (3) est réalisé sous forme de détecteur multibande.

13. Appareil de prise de vues selon l'une des revendications 1 à 12,
**caractérisé par le fait que** le détecteur (3) est réalisé sous forme de bloc détecteur 3 couleurs avec photomultiplicateurs et écrans colorés.

14. Appareil de prise de vues selon l'une des revendications 1 à 13,
**caractérisé par le fait qu'**un trou d'épingle de détection (18) est logé de manière fixe dans la marche des rayons de détection (17) et que l'ajustement est effectué par alignement de la source lumineuse laser (1).

15. Appareil de prise de vues selon l'une des revendications 1 à 14,
**caractérisé par le fait qu'**un zoom électronique est disposé dans la marche des rayons de détection (17).

16. Appareil de prise de vues selon l'une des revendications 1 à 15,
**caractérisé par le fait qu'**un filtre polaire est disposé dans la marche des rayons de détection (17) pour des applications de polarisation.

17. Appareil de prise de vues selon l'une des revendications 1 à 16,
**caractérisé par le fait que** l'électronique de commande (4) comprend un microprocesseur avec un registre temporaire d'images et une sortie TV standard.

18. Appareil de prise de vues selon la revendication 17,
**caractérisé par le fait que** l'électronique de commande (4) comprend un convertisseur de balayage qui transforme le balayage polyfocal relativement lent en signaux TV standards, par exemple en signaux BAS, FBAS, VGA, SVGA, etc.

19. Appareil de prise de vues selon la revendication 17 ou 18,
**caractérisé par le fait qu'**un interface est prévu pour le raccordement d'appareils périphériques, en particulier d'appareils de sortie standards et de dispositifs de mémorisation standards.

20. Appareil de prise de vues selon l'une des revendications 1 à 19,
**caractérisé par le fait qu'**un afficheur (22) intégral est prévu dans le boîtier (5) du dispositif de prise de vues.

21. Appareil de prise de vues selon la revendication 20,
**caractérisé par le fait que** l'afficheur (22) est réalisé sous forme d'afficheur LCD.

22. Appareil de prise de vues selon la revendication 20 ou 21,
**caractérisé par le fait que** l'afficheur (22) comprend une surimpression de date et heure.

23. Appareil de prise de vues selon l'une des revendications 20 à 22,
**caractérisé par le fait que** l'afficheur (22) comprend un écran tactile.

24. Appareil de prise de vues selon l'une des revendications 1 à 23,
**caractérisé par le fait que** trois éléments de commande sont prévus au total, à savoir des éléments de commande pour les fonctions «Marche/Arrêt», «Intensité» et «Intégration».
